# FASCICULE DE BREVET EUROPEEN

(11) **EP 0 503 713 B1**
(45) Date de publication et mention de la délivrance du brevet: **24.07.1996**
(21) Numéro de dépôt: 92200614.3
(22) Date de dépôt: 03.03.1992
(51) Int. Cl.: B01J 2/08, B01J 21/08, C01B 33/154, C08F 4/02

(54) **Particules microsphéroidales et leur procédé d'obtention.**
Microsphäroidale Teilchen und ihre Herstellungsverfahren.
Microspheroidal particles and process for obtaining them

(30) Priorité: 11.03.1991 BE 9100227
(43) Date de publication de la demande: 16.09.1992
(60) Demande divisionnaire: 95202079.0
(73) Titulaire: SOLVAY (Société Anonyme), B-1050 Bruxelles (BE)
(72) Inventeur: Derleth, Helmut, W-3070 Nienburg (DE); Grosjean, Abel, B-1000 Bruxelles (BE)
(74) Mandataire: Marckx, Frieda

(56) Documents cités:
- EP-A- 0 167 690
- EP-A- 0 197 776
- DE-A- 2 610 852
- FR-A- 2 290 395

## Description

La présente invention concerne un procédé d'obtention de particules microsphéroïdales, plus particulièrement de particules microsphéroïdales à base de silice. Elle concerne aussi des particules microsphéroïdales de silice à surface spécifique élevée. Elle concerne encore des catalyseurs contenant du chrome supporté sur ces particules microsphéroïdales de silice ainsi qu'un procédé pour polymériser des alpha-oléfines en présence de ces catalyseurs.

Des catalyseurs supportés utilisables pour la polymérisation des alpha-oléfines ont été décrits dans le brevet US-A-2825721 (PHILLIPS PETROLEUM) et sont connus sous la dénomination de catalyseurs du type PHILLIPS.

Les catalyseurs décrits dans ce brevet contiennent un oxyde de chrome dispersé sur un support qui peut être de la silice et sont activés par calcination, dans une atmosphère oxydante, dans des conditions telles qu'au moins une partie du chrome est convertie en chrome hexavalent.

On a également décrit des catalyseurs supportés de ce type capables de conduire à des polymères présentant des poids moléculaires moyens moins élevés (c'est-à-dire caractérisés par des indices de fusion (melt indexes) plus élevés), qui sont plus aisément transformables par les méthodes conventionnelles de mise en oeuvre. Cette modification est obtenue en incorporant, outre l'oxyde de chrome, de l'oxyde de titane au catalyseur. Cette incorporation peut être effectuée ultérieurement à celle du chrome, en dispersant sur le support, via un milieu non aqueux, un composé de titane, transformable en oxyde par calcination (brevet US-A-3622521 (PHILLIPS PETROLEUM)). Cette incorporation peut aussi être effectuée en coprécipitant le composé de titane et la silice. Le composé de chrome peut aussi être incorporé de cette manière (brevet US-A-3887494 (PHILLIPS PETROLEUM)). Les gels résultant de ces coprécipitations sont connus, suivant leur composition, sous la dénomination de "cogels" silice-titane, "cogels" silice-chrome et "tergels" silice-titane-chrome.

Il est bien connu, par ailleurs, que la texture de ces catalyseurs excerce une influence considérable sur la morphologie des polymères obtenus à leur intervention. Pour cette raison, on a déjà proposé de disperser le chrome sur des silices dites "microsphéroïdales". Il s'agit de silices dont les particules, de forme généralement sphérique et de distribution granulométrique étroite, présentent un diamètre moyen compris entre 0,5 et 200 microns environ.

De nombreuses méthodes de fabrication de ces silices "microsphéroïdales" ont été décrites dans la littérature. A titre d'exemples de ces méthodes, on peut citer : la vaporisation, l'agglomération et la polymérisation en émulsion.

Dans les techniques de vaporisation, une solution de silicate de sodium, éventuellement partiellement neutralisée, est séchée par vaporisation à haute température (brevets GB-A-1077908 et GB-A-1094798 (GRACE & CO.)). Les particules de xérogel ainsi obtenues présentent une granulométrie trop fine pour une utilisation comme support de catalyseur de polymérisation des alpha-oléfines.

On a décrit également l'obtention de particules sphéroïdales de silice utilisables comme supports de catalyseurs de polymérisation des alpha-oléfines par pulvérisation d'un hydrosol obtenu par introduction d'une solution de silicate alcalin longitudinalement et tangentiellement dans un courant d'acide minéral aqueux (demandes de brevet DE-A-2540279 et DE-A-2540278 (BASF)). L'addition de la solution de silicate alcalin peut également se faire en divers points distribués le long du courant d'acide minéral dilué (demande de brevet DE-A-2103243 (BASF)). L'hydrosol ainsi obtenu est instable et présente un manque d'homogénéité dû à des variations de viscosité et de durée de gélification en fonction du temps et de l'endroit. La production de microparticules de silice selon ce procédé ne peut dès lors être constante et/ou reproductible dans le temps.

Des particules sphéroïdales de silice peuvent également être obtenues par agglomération de silice colloïdale dans une matrice polymérique d'urée et de formaldéhyde (brevet US-A-4010242 (DU PONT DE NEMOURS)). Les particules de catalyseur obtenues au départ de ces supports étant fragiles, elles se fragmentent rapidement lors de la polymérisation au détriment de la morphologie des polymères obtenus à leur intervention.

Lorsqu'il est fait usage de polymérisation en émulsion, on gélifie une suspension de gouttelettes de solution acide de silicate de sodium dans un liquide visqueux dans lequel ni la solution de silicate ni le produit de gélification ne sont solubles (voir par exemple la demande de brevet EP-A-170334 (SHELL INT. RES. MIJ.)). Ce procédé permet l'obtention de particules sphéroïdales de grande taille qu'il est nécessaire de traiter mécaniquement pour permettre leur utilisation comme supports de catalyseurs de polymérisation des alpha-oléfines. Ce traitement mécanique se fait au détriment de la morphologie des supports.

La présente invention vise à fournir des particules microsphéroïdales à base de silice présentant une combinaison de propriétés que ne possèdent pas les particules appartenant à l'art antérieur. Elle vise également à fournir un procédé d'obtention de ces particules microsphéroïdales de silice de bonne morphologie ne présentant pas les inconvénients des procédés connus.

L'invention concerne dès lors, à titre principal, des particules microsphéroïdales de silice de 50 à 200 µm de diamètre et de préférence de diamètre supérieur à 100 µm, caractérisées en outre par la combinaison:
d'une surface spécifique supérieure à 700 m²/g;
d'un volume poreux compris entre 1 et 3,5 cm³/g;
d'un facteur de rondeur inférieur à 1,40;
d'un coefficient de variation de leur distribution granulométrique exprimé en % inférieur à 60 %. La présente invention concerne aussi un procédé d'obtention des particules microsphéroïdales homodisperses de silice décrits ci-avant, caractérisé en ce qu'il comprend une pulvérisation au travers d'un orifice de pulvérisation et dans une chambre, d'un matériau liquide (L) gélifiable choisi parmi les précurseurs de silice, chargé électrostatiquement de manière à produire des macrogouttes de 100 à 1000 µm de diamètre, issues directement de l'orifice de pulvérisation qui se scindent en microgouttes plus petites de 50 à 200 µm de diamètre qui tombent dans la chambre, une gélification se produisant de manière prépondérante pendant la chute des microgouttes dans la chambre. Les particules microsphéroïdales ainsi obtenues peuvent être recueillies sur une surface solide ou de préférence dans un milieu liquide (C).

Par "particules microsphéroïdales" on entend désigner des particules de forme généralement sphérique, de 50 à 200 µm de diamètre et de préférence de diamètre supérieur à 100 µm, caractérisées, en outre, par une surface spécifique supérieure à 200 m²/g.

Les particules microsphéroïdales obtenues selon le procédé de l'invention sont généralement homodisperses. On entend par "homodisperses" des particules qui présentent une distribution granulométrique étroite caractérisée par l'écart type de la valeur moyenne de leur diamètre.

Au sens de la présente invention, on entend définir par le terme "macrogouttes", les gouttes, de 100 à 1000 µm de diamètre, issues directement de l'orifice de pulvérisation. Ces macrogouttes de forme générale sphérique et dont les dimensions sont conditionnées notamment par celles de l'orifice de pulvérisation, se scindent, sous l'effet de forces électrostatiques, en gouttes plus petites appelées "microgouttes". Ces microgouttes également de forme générale sphérique ont un diamètre variant de 50 à 200 µm et de préférence supérieur à 100 µm.

Par les termes "orifice de pulvérisation", qui sont employés dans la présente description, on entend définir aussi bien un orifice unique qu'une pluralité d'orifices. Ces orifices peuvent être des orifices fixes tels que des tuyères, des injecteurs, des filières ou des aiguilles creuses, ou des orifices mobiles tels que des pulvérisateurs rotatifs.

La dimension de ces orifices est généralement comprise entre 50 et 500 µm.

Les microgouttes obtenues dans le procédé selon l'invention sont gélifiées de manière à générer des particules microsphéroïdales de dimensions générales similaires à celles desdites microgouttes.

Le procédé selon l'invention comprend la pulvérisation, au travers d'un orifice de pulvérisation et dans une chambre, d'un matériau liquide (L) gélifiable choisi parmi les précurseurs de silice, chargé électrostatiquement. Le matériau liquide (L) est chargé électrostatiquement par l'intermédiaire d'électrode(s), chargée(s) indifféremment positivement ou négativement et disposée(s) directement dans le matériau liquide (L) ou sur la face extérieure de l'orifice de pulvérisation lorsque ce dernier est constitué d'un matériau électriquement conducteur. La charge électrostatique est générée, le plus souvent par un générateur traditionnel tel qu'un générateur à ruban du type générateur électrostatique de van de Graaf ou par un redresseur de haute tension. La tension électrostatique à laquelle est soumis le matériau liquide (L) est généralement comprise entre 1 et 100 kV, de préférence entre 5 et 80 kV, plus particulièrement entre 10 et 50 kV. Les macrogouttes obtenues lors de la pulvérisation sont déstabilisées par la densité de charges électrostatiques et elles se scindent en gouttes plus fines (microgouttes) présentant un rapport surface/volume plus élevé. (Il est généralement admis que plus la tension appliquée au matériau liquide est élevée, plus fines sont les microgouttes).

Il va de soi que le matériau liquide (L) est pulvérisé dans la chambre à une pression supérieure à celle qui y règne.

Le matériau liquide (L) du procédé selon l'invention peut être n'importe quel précurseur de silice liquide susceptible d'être gélifié. Les solutions ou suspensions contenant un composé choisi parmi les précurseurs de silice constituent des exemples de pareils matériaux. Des exemples particuliers de ces composés sont les dérivés du silicium susceptibles de se gélifier sous l'action d'un composé acide ou basique, liquide ou gazeux, appelé ci-après composé (B). Le composé gélifiable est généralement choisi parmi les silicates de métaux alcalins, d'ammonium et d'ammoniums quaternaires ou les tétra-alkoxysilanes tels que le tétra-méthoxy- et le tétra-éthoxysilane.

Des exemples de composés acides utilisables à titre de composés (B) sont
- les oxacides inorganiques tels que l'acide sulfurique ou le dioxyde de carbone;
- les hydracides inorganiques tels que le chlorure d'hydrogène;
- les acides carboxyliques tels que l'acide acétique.

Des exemples de composé (B) basique sont l'ammoniac, les amines aliphatiques, alicycliques ou aromatiques.

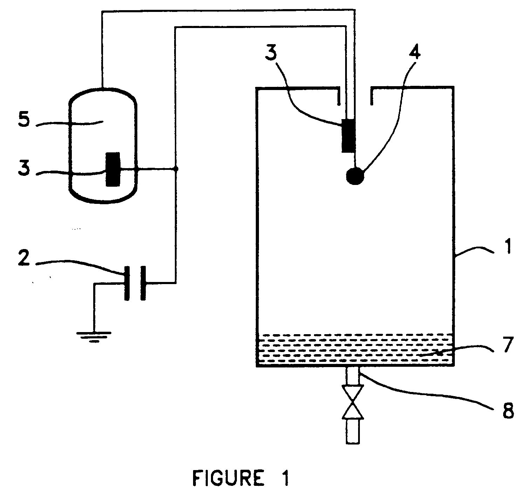

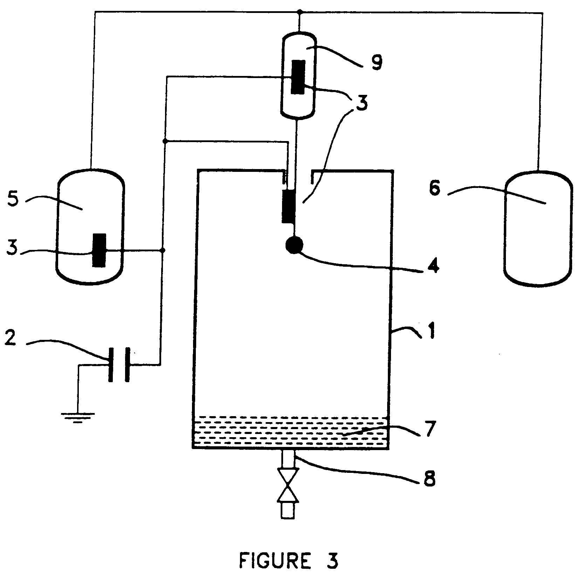

Dans le procédé selon l'invention, la mise en contact du composé (a) et du matériau liquide (L) peut se faire avant, pendant ou après la pulvérisation de ce dernier. On distingue généralement trois variantes (variantes (x), (y) et (z)) suivant la composition du matériau liquide (L) et le moment où (B) est mis en contact avec lui. Ces variantes sont explicitées dans la description qui va suivre dans laquelle on se réfère aux figures 1 à 3 annexées qui illustrent schématiquement les dispositifs utilisés pour les exécuter. Dans ces figures sont représentés :
- la chambre - 1
- le générateur de charges électrostatiques - 2
- la (les) électrode(s) - 3
- l'orifice de pulvérisation - 4
- une enceinte contenant le matériau liquide (L) - 5
- une enceinte contenant le composé (B) - 6. Dans la variante de réalisation illustrée par la figure 1, cette enceinte est la chambre 1 elle-même
- un liquide (C) destiné à recueillir les microparticules - 7
- un orifice d'évacuation du liquide (C) - 8
- une filière mélangeuse (figure 3) - 9
Dans ces dispositifs, les divers éléments susceptibles d'être chargés électrostatiquement sont généralement isolés électriquement.

Dans la première variante (variante (x) illustrée par la figure 1), le matériau liquide (L) est pulvérisé dans la chambre 1 contenant le composé (B), à l'état gazeux. Un matériau (L) particulièrement préféré, dans ce cas, est une solution de silicate de sodium. La teneur en silicium dans le matériau liquide (L), calculée en % en poids de SiO₂, est comprise entre 1 et 30 % de préférence entre 2 et 20 %, plus particulièrement entre 5 et 15 % en poids de SiO₂ par rapport au poids de matériau liquide (L). A titre de composé (B), on utilise préférentiellement le chlorure d'hydrogène ou l'ammoniac. La pression régnant dans la chambre étant généralement égale à la pression atmosphérique, la pression partielle du composé (B) dans cette chambre est généralement inférieure à une atmosphère et ce constituant est généralement mélangé avec un gaz neutre tel que l'air sec ou l'azote.

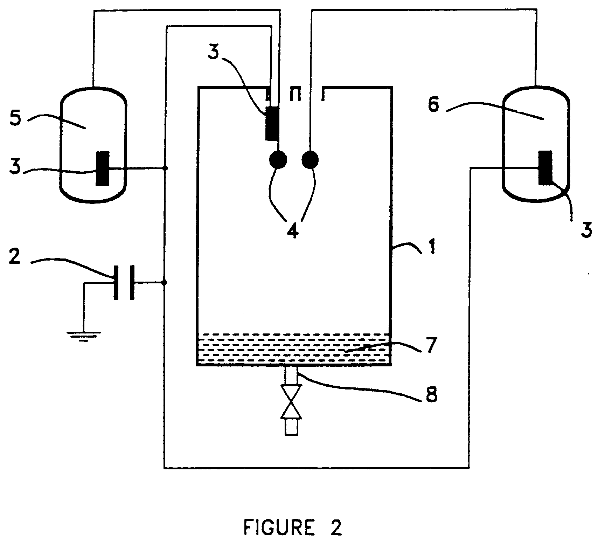

Dans la deuxième variante du procédé selon l'invention, (variante (y) illustrée par la figure 2), le matériau liquide (L) et le composé (B) sous la forme liquide ou sous la forme d'une solution généralement aqueuse sont pulvérisés indépendamment l'un de l'autre mais simultanément dans la chambre 1. Les deux orifices de pulvérisation 4 sont le plus souvent situés de manière à ce que les gouttes qui en sont issues puissent entrer en contact les unes avec les autres de façon à ce que le composé (B) puisse induire la gélification du matériau liquide (L) qui est ici encore de préférence le silicate de sodium. Le composé (B) préféré est l'acide sulfurique pour des raisons de corrosiveté. La concentration en composé (B) dans la solution est généralement comprise entre 1 et 50 % en poids, de préférence entre 2 et 20 %, plus particulièrement entre 5 et 10 % en poids de composé (B) par rapport au poids total de la solution. Ce composé (B) peut également être chargé électrostatiquement d'une charge de même polarité que celle du matériau liquide (L). La nature de l'atmosphère régnant dans la chambre est choisie le plus souvent parmi des gaz neutres tels que l'air sec ou l'azote.

Afin d'améliorer le contact entre le matériau liquide (L) et la solution contenant le composé (B), la zone de contact des gouttes peut être entourée d'un générateur d'ondes acoustiques annulaire disposé de manière à faire coïncider les noeuds et les ventres de vibration avec la trajectoire des gouttes.

Dans la troisième variante du procédé selon l'invention (variante (z) illustrée par la figure 3), le matériau liquide (L) est mis en contact, dans une filière mélangeuse 9 située avant l'orifice de pulvérisation 4, avec une solution généralement aqueuse du composé (B). Dans cette variante du procédé selon l'invention la nature du matériau liquide (L) est de préférence identique à celles décrites plus haut pour les variantes (x) et (y) et la nature du composé (B) est la même que celle décrite pour la variante (y). Le pH du matériau liquide (L), additionné de la solution du composé (B) est généralement compris entre 3 et 9. La nature de l'atmosphère gazeuse régnant dans la chambre 1 est choisie le plus souvent parmi les gaz neutres tels que l'air sec ou l'azote. Il est également possible d'accélérer le processus de gélification par l'introduction dans la chambre 1 d'un composé (B), à l'état gazeux, identique à ou différent du composé (B) ci-dessus.

La variante (x) donne de très bons résultats.

La température à laquelle est pulvérisé le matériau liquide (L) est comprise entre 0 et 100 °C, de préférence entre 10 et 50 °C. De bons résultats sont obtenus lorsque cette pulvérisation est effectuée à température ambiante.

Dans la suite de la description de l'invention, le matériau liquide (L) sera assimilé par simplification à un hydrosol de silice, sans toutefois y limiter la portée de l'invention.

Quelle que soit la variante utilisée, l'orifice de pulvérisation 4 est situé dans la partie supérieure de la chambre 1, de manière à ce que les microgouttes en cours de gélification parcourent une certaine distance dans une atmosphère gazeuse avant d'être recueillies sur une surface solide ou de préférence dans un milieu liquide (C) 7. Lorsque la chambre 1 contient un composé (B) à l'état gazeux, le liquide (C) est généralement une solution aqueuse de sulfate d'ammonium, d'acide chlorhydrique ou d'ammoniaque. Dans les autres cas, le liquide (C) est choisi parmi les liquides inertes tels que l'eau. Des liquides organiques peuvent également être utilisés à titre de liquide (C). Des exemples de tels liquides sont les hydrocarbures aliphatiques, cycloaliphatiques et aromatiques liquides à température ambiante.

La gélification de la silice se produit de manière prépondérante pendant la chute des microgouttes dans la chambre. La durée de cette chute dépend de la densité du matériau liquide (L), de la taille des microgouttes et de la hauteur de la chambre. La prise en compte de ces facteurs peut nécessiter quelques essais de routine. Il va de soi que la hauteur de la chambre doit être suffisante pour assurer le processus de gélification durant la chute des microgouttes et que son diamètre soit tel que leur dépôt sur les parois latérales soit empêché. La hauteur de la chambre est généralement comprise entre 1 et 20 m, de préférence entre 4 et 15 m, plus particulièrement entre 5 et 10 m. Son diamètre est compris entre 0,2 et 6 m, de préférence entre 0,5 et 4 m, plus particulièrement entre 1 et 3 m. Le diamètre de la chambre peut être augmenté dans le cas d'une pulvérisation au travers d'une pluralité d'orifices.

Le matériau liquide (L) utilisé dans le procédé selon l'invention peut également contenir des composés du titane et/ou du chrome susceptibles de coprécipiter avec la silice.

Les composés du titane sont généralement des composés convertibles en oxydes métalliques par calcination, tels que le tétrachlorure de titane, le sulfate de titane, l'oxalate de titane et l'oxalate de titane-potassium. Lorsque le composé du titane est incorporé à la solution de silicate de métal alcalin, les composés du titane préférés sont des matières hydrosolubles qui ne précipitent pas le silicate telles que l'oxalate de titane et l'oxalate de titane-potassium. La teneur en titane dans le matériau liquide (L), en % en poids par rapport au poids du SiO₂, varie de 0,1 à 10 %, de préférence de 0,5 à 7,5 %, plus particulièrement de 1 à 4 % en poids de titane par rapport au poids de SiO₂ contenu dans le matériau liquide (L).

Le matériau liquide (L) peut aussi contenir un composé du chrome. Des composés du chrome qui conviennent sont par exemple le sulfate chromique, l'acétate de chrome, le chlorure ou le nitrate de chrome ou les oxydes de chrome. Le chrome est présent dans le matériau de départ en proportions variant de 0,05 à 10 % en poids de chrome calculé par rapport au poids de SiO₂, de préférence de 0,1 à 5 %, plus particulièrement de 0,25 à 2 % en poids de chrome par rapport au poids de SiO₂.

Le composé du titane peut également être incorporé aux microparticules sphéroïdales - et ceci constitue un autre aspect de l'invention - par introduction de vapeurs de TiCl₄ dans la chambre. On observe alors une adsorption du TiCl₄ sur les microgouttes d'hydrosol en cours de gélification. La quantité de TiCl₄ à mettre en oeuvre doit conduire à une incorporation de titane dans les particules solides équivalente à celle décrite ci-dessus. La détermination de cette quantité peut dès lors nécessiter quelques essais de routine préalables.

L'incorporation de fines particules d'oxydes et de sels métalliques tels que des oxydes de titane, d'aluminium, de silicium ou de zirconium dans le matériau liquide (L) est également possible.

Au plus tard après gélification substantielle, telle que décrite plus haut, les particules microsphéroïdales sont recueillies sur une surface solide ou de préférence dans le liquide (C) puis évacuées de manière conventionnelle via un orifice généralement terminé par une vanne. Lorsque les particules microsphéroïdales sont recueillies dans le liquide (C), elles sont séparées de la suspension ainsi formée par les méthodes physiques connues comme par exemple par filtration ou décantation.

Les particules ainsi obtenues peuvent, si nécessaire, ultérieurement être lavées plusieurs fois avec de l'eau puis avec un agent de lavage choisi parmi les solutions aqueuses de sels d'ammonium et les acides dilués de manière à réduire la teneur en métal alcalin de ces particules jusqu'à des concentrations inférieures à 1 % en poids, de préférence inférieures à 1 g/kg, en particulier inférieures à 0,4 g/kg.

Ces particules microsphéroïdales sont ensuite mises en contact avec un liquide organique de la série des alcanols contenant de 1 à 4 atomes de carbone et/ou des alcanones contenant de 3 à 5 atomes de carbone. Ce traitement a pour but d'en extraire l'eau.

La suspension ainsi obtenue, déshydratée par le liquide organique, est enfin séchée par une quelconque des méthodes connues à cet effet, par exemple par traitement thermique dans un lit agité ou fluide ou par pulvérisation dans des conditions telles qu'il y ait évaporation du liquide (obtention d'un xérogel).

Un séchage par distillation azéotropique peut également être effectué.

Les particules microsphéroïdales de silice obtenues selon l'invention sont généralement des microsphères de 50 à 200 µm de diamètre et de préférence de diamètre supérieur à 100 µm, dont la surface spécifique est supérieure à 200 m²/g. Le volume poreux de ces particules microsphéroïdales est généralement compris entre 1 et 3,5 cm³/g, de préférence entre 1,2 et 2,5 cm³/g, plus particulièrement entre 1,4 et 2,2 cm³/g.

Un avantage du procédé selon l'invention est la morphologie et la distribution granulométrique des particules qu'il permet d'obtenir. Ces deux propriétés peuvent être caractérisées lors de l'observation au microscope optique et plus précisément lors du traitement par analyse d'images du résultat de cette observation. On remarque, par cette méthode, que les particules obtenues selon le procédé de l'invention sont des microsphères dont l'image possède un facteur de rondeur, défini comme étant le rapport entre le carré du périmètre moyen des particules et la surface moyenne de ces dernières multiplié par 4 π, inférieur à 1,40 de préférence inférieur à 1,35 plus particulièrement inférieur à 1,30. Un autre avantage de cette invention réside dans le fait que la distribution granulométrique des particules microsphéroïdales est particulièrement étroite. Cette dernière peut être caractérisée par son coefficient de variation exprimé en %. Une valeur trop élevée de ce coefficient de variation indique l'existence d'une importante quantité de particules anormalement fines ou grosses. Le coefficient de variation de la distribution granulométrique des particules est inférieur à 75 %, de préférence inférieur à 70 %, plus particulièrement inférieur à 60 %.

On peut aisément, dans le procédé selon l'invention, modifier les caractéristiques morphologiques des poudres obtenues en faisant varier la viscosité et/ou la tension électrostatique du matériau liquide (L).

On peut également dévier les gouttes chargées en installant en certains points de la chambre des électrodes de même polarité. L'installation d'électrodes de polarité opposée permet par contre d'attirer les gouttes vers ces points. Ces modifications permettent également de régler la morphologie des particules microsphéroïdales.

Le procédé selon l'invention permet également de modifier rapidement la composition chimique des particules solides par simple modification de la composition du matériau liquide (L).

La présente invention concerne aussi des catalyseurs de polymérisation des alpha-oléfines. Ces catalyseurs supportés sur les particules microsphéroïdales de silice obtenues suivant le procédé de l'invention contiennent du chrome. Lorsque l'on souhaite obtenir des catalyseurs capables de produire des polymères présentant des poids moléculaires moyens moins élevés, ces catalyseurs peuvent contenir, en outre, des oxydes des éléments des groupes IVb et IIIa du Tableau Périodique tels que des oxydes de titane, de zirconium ou d'aluminium, les oxydes de titane étant généralement préférés.

Les différents composés conduisant à ces oxydes peuvent être introduits comme décrit ci-dessus, lors de la formation des particules microsphéroïdales de silice. Ils peuvent également être introduits de toute autre manière connue dans la technique. A titre d'exemple, on peut citer l'imprégnation des particules de silice par une solution aqueuse d'un composé du chrome suivie d'une imprégnation par une solution non aqueuse d'un alcoolate de titane, comme décrit dans le brevet US-A-3622521 (PHILLIPS PETROLEUM). Les composés du chrome utilisés sont choisis de préférence parmi les sels hydrosolubles tels que les oxydes, le nitrate, l'acétate, le chlorure et le sulfate chromiques ou tels que le chromate et le bichromate d'ammonium. On obtient également de bons catalyseurs en inversant l'ordre dans lequel on réalise ces deux imprégnations ou en supprimant l'imprégnation au titane.

Un autre procédé d'incorporation du composé du chrome consiste à imprégner le support, après qu'il ait été séché, avec une solution dans un diluant hydrocarboné inerte d'un composé de chrome convertible en oxyde par calcination. Des exemples de tels composés sont le chromate de t-butyle, l'acétylacétonate ou l'acétate de chrome. Le diluant est généralement choisi parmi les hydrocarbures aliphatiques, cycloaliphatiques et aromatiques liquides, tels que les alcanes, isoalcanes et cycloalcanes liquides et le toluène.

Finalement, un composé du chrome peut être simplement mélangé physiquement avec la silice.

Les solides ainsi obtenus peuvent être traités de toutes les manières connues dans la technique pour l'obtention de catalyseurs pour la polymérisation des alpha-oléfines. Le solide sec contenant le composé du chrome est généralement activé par calcination de manière à transformer au moins une partie du composé de chrome en oxyde de chrome hexavalent.

Cette calcination peut avoir lieu, par exemple, par chauffage, en présence d'oxygène moléculaire, à une température comprise entre 300 et 1200 °C, de préférence entre 400 et 1000 °C, plus particulièrement entre 350 et 950 °C. La calcination s'effectue pendant une durée comprise de préférence entre 30 minutes et 50 heures et plus particulièrement entre 2 et 20 heures. On peut procéder à cette opération en maintenant le catalyseur dans un réacteur tubulaire en quartz sous balayage d'air sec ou en le maintenant dans un lit fluidisé jusqu'à ce que la matière soit refroidie. La montée en température peut être effectuée de manière continue ou en observant un ou plusieurs paliers.

Le chrome est généralement présent dans le catalyseur en proportions variant de 0,05 à 10 % en poids, de préférence de 0,1 à 5 %, plus particulièrement de 0,25 à 2 % en poids de chrome sur base du poids total du catalyseur (support plus composé du chrome et éventuellement du titane).

Lorsque le catalyseur contient du titane, sa teneur varie généralement de 0,1 à 10 % en poids, de préférence de 0,5 à 7,5 % en poids, plus particulièrement de 1 à 4 % en poids par rapport au poids total de catalyseur.

L'invention concerne enfin un procédé pour la polymérisation des alpha-oléfines en présence des catalyseurs décrits ci-dessus.

Un avantage considérable du procédé d'obtention des particules microsphéroïdales selon l'invention est qu'il conduit à la formation de supports et par conséquent de catalyseurs de poids spécifique apparent particulièrement élevé, ce qui permet d'augmenter la densité de suspension de polymère dans le réacteur et par conséquent la productivité de ce dernier. Un autre avantage de ce procédé est qu'il conduit à l'obtention de catalyseurs et de polymères dont le taux de fines est très faible et qui sont par conséquent plus aisément mis en oeuvre.

Un autre avantage du procédé selon l'invention est qu'il permet, dans certaines de ses applications, l'obtention de supports de surface spécifique particulièrement élevée, ce qui conduit à des catalyseurs plus actifs.

Les catalyseurs au chrome tels que décrits dans l'invention peuvent être utilisés pour la polymérisation des alpha-oléfines contenant de 2 à 8 atomes de carbone par molécule et en particulier pour la production d'homopolymères de l'éthylène et de copolymères de l'éthylène avec un ou plusieurs comonomères sélectionnés parmi les alpha-oléfines décrites ci-dessus. De préférence, ces comonomères sont le propylène, le 1-butène, le 1-pentène, le 3-méthyl-1-butène, le 1-hexène, les 3- et 4-méthyl-1-pentènes et 1-octène. Des dioléfines comprenant de 4 à 18 atomes de carbone peuvent également être copolymérisées avec l'éthylène. De préférence, les dioléfines sont des dioléfines aliphatiques non conjuguées telles que l'hexadiène-1,4, des dioléfines monocycliques non conjuguées telles que le 4-vinylcyclohexène ou des dioléfines alicycliques ayant un pont endocyclique telles que le dicyclopentadiène, le méthylène- et l'éthylidènenorbornène et des dioléfines aliphatiques conjuguées telles que le 1,3-butadiène, l'isoprène et le 1,3-pentadiène.

Les catalyseurs selon l'invention conviennent particulièrement bien pour la fabrication d'homopolymères de l'éthylène et de copolymères contenant au moins 90 %, de préférence au moins 95 % en poids d'éthylène. Les comonomères préférés sont le propylène, le 1-butène, le 1-hexène ou le 1-octène.

La polymérisation peut être effectuée selon n'importe quel procédé connu : en solution, en suspension dans un diluant hydrocarboné ou encore en phase gazeuse.
Les catalyseurs de l'invention trouvent une utilisation particulièrement intéressante dans les polymérisations en suspension pour la production de polymères présentant un large domaine de variation des indices de fluidité (melt indexes) et des distributions des masses moléculaires, ces deux paramètres étant contrôlables par les méthodes bien connues de la technique telles que les conditions de polymérisation, les conditions d'activation du support, sa morphologie, etc.

La polymérisation en suspension est effectuée dans un diluant hydrocarboné tel que les hydrocarbures aliphatiques, cycloaliphatiques et aromatiques liquides, à une température telle que le polymère formé y soit insoluble. Les diluants préférés sont les alcanes linéaires tels que le n-butane, le n-hexane et le n-heptane ou les alcanes ramifiés tels que l'isobutane, l'isopentane, l'isooctane et le 2,2-diméthylpropane ou les cycloalcanes tels que le cyclopentane et le cyclohexane ou leurs mélanges.

La température de polymérisation est choisie généralement entre 20 et 200 °C, de préférence entre 50 et 150 °C, en particulier entre 80 et 115 °C. La pression d'éthylène est choisie le plus souvent entre la pression atmosphérique et 50 bars, de préférence entre 4 et 20 bars, plus particulièrement entre 6 et 15 bars.

La polymérisation peut être effectuée en continu ou en discontinu.

L'exemple 1 suivant sert à illustrer l'invention. L'exemple 2R est donné à titre de comparaison. La signification des symboles utilisés dans ces exemples, les unités exprimant les grandeurs mentionnées et les méthodes de mesure de ces grandeurs sont explicitées ci-dessous.

Les supports sont observés au microscope optique (grossissement 14), le résultat de cette observation est traité par analyse d'images via un analyseur Quantimet 970 dans le but de déterminer le facteur de rondeur des particules, la dimension moyenne de ces dernières ainsi que le coefficient de variation de la distribution granulométrique des particules exprimé en %.
- fRo: = facteur de rondeur des images des particules, défini par le rapport (périmètre)²/(4 π*surface).
- Dₘ: = diamètre moyen des particules de catalyseur en µm.
- σ: = coefficient de variation de la distribution granulométrique des particules exprimé en % ((écart type/Dₘ) X 100).
- α: = activité catalytique exprimée conventionnellement en grammes de polymère insoluble, obtenus par heure et par gramme de catalyseur et divisés par la fraction molaire d'éthylène dans le diluant.
- T_{ind}: = temps d'induction, défini comme étant le temps écoulé entre l'introduction du catalyseur et l'apparition d'une diminution de pression caractéristique du début de polymérisation.
- MI: = indice de fluidité exprimé en fondu, mesuré sous une charge de 5 kg à 190 °C et exprimé en g/10min (norme ASTM D 1238).
- HLMI: = indice de fluidité exprimé en fondu, mesuré sous une charge de 21,6 kg à 190 °C et exprimé en g/10min (norme ASTM D 1238).
- Ss: = surface spécifique du solide catalytique exprimée en m²/g (norme britannique BS 4359/1).
- VP: = volume poreux du support de catalyseur mesuré par la méthode de pénétration à l'azote au moyen de porosimètres commercialisés par Carlo Erba Co. dans la zone des rayons de pores compris entre 0 et 2000 Å et exprimé en cm³/g.

### Exemple 1

### A - Préparation de particules microsphéroïdales de silice

Cet exemple illustre l'obtention de particules microsphéroïdales de silice selon la variante (x) du procédé de l'invention telle qu'illustrée à la figure 1.

Dans l'enceinte 5 destinée à contenir le matériau liquide (L), on prépare 10 litres d'une solution aqueuse de silicate de sodium contenant 3,35 % en poids de Na₂O et 10,10 % en poids de SiO₂; on y dispose une électrode 3 chargée positivement par l'intermédiaire d'un générateur de charges électrostatiques 2 du type générateur de van de Graaf. Ce matériau liquide (L) est pulvérisé sous une pression de 3 bars et sous une tension de 50 kV, au travers d'un orifice de pulvérisation 4 de 150 µm de diamètre dans une chambre 1 de 7 m de haut et 2 m de diamètre isolée électriquement et remplie de chlorure d'hydrogène gazeux (composé (B)).

Les microparticules sphéroïdales sont recueillies dans une solution aqueuse contenant 3 % de sulfate d'ammonium (liquide (C) - 7) puis évacuées par l'orifice 8 et filtrées. Elles sont ensuite lavées 4 fois successivement par de l'eau puis par une solution à 0,5 % de (NH₄)₂SO4. La suspension résultant de ces traitements est ensuite mise en contact pendant 4 heures avec de l'isopropanol, séchée pendant 4 heures à 150 °C et pendant 4 heures à 538 °C.

Les particules microsphéroïdales ont un diamètre de 109 µm, un σ de 54 et un fRo de 1,27. Leur Ss est de 860 m²/g et leur VP est de 1,58 cm³/g.

### B - Catalyseur préparé à partir des particules microsphéroïdales obtenues selon A

Dans un réacteur de 100 ml, on introduit 20 g de particules microsphéroïdales de silice telles que préparées au point A. On y ajoute, goutte à goutte, 32 ml d'une solution d'acétate de chrome dilué dans du toluène à raison de 6,3 g/l de chrome. Le catalyseur est séché par évaporation sous vide puis introduit dans un réacteur tubulaire en quartz de 33 mm de diamètre dans lequel circule de l'air sec avec un débit de 12 litres normaux par heure. Ce dispositif est ensuite placé dans un four électrique, et chauffé jusqu'à 815 °C pendant une heure. Le catalyseur est
maintenu à cette température pendant 15 heures supplémentaires puis ramené à température ambiante.

### C - Polymérisation de l'éthylène

Dans un autoclave de 3 l préalablement séché, et muni d'un agitateur, on introduit 1 l d'isobutane puis on élève la température à 105 °C avant d'y réaliser une pression de 12,9 bars d'éthylène et d'introduire 50 mg de catalyseur préparé selon B. Le réacteur est maintenu dans ces conditions pendant 1 heure après la période d'induction estimée à 17 minutes. Après dégazage, on récupère, avec une activité α de 42094, un polymère se présentant sous la forme de grains de morphologie régulière, caractérisé par un MI de 0,2 et un HLMI de 4,4.

### Exemple 2R

Cet exemple est donné à titre de comparaison.

Le support utilisé pour la réalisation de ce catalyseur est une silice commercialisée par la firme GRACE sous la dénomination 532. Sa Ss et son VP sont respectivement: 320 m²/g et 1,65 cm³/g.

Sa morphologie est caractérisée comme suit:
- fRo = 1.43
- Dₘ = 49.5 µm
- σ = 79
On imprègne 20 g de ce support par 33 ml d'une solution d'acétate de chrome dilué dans du toluène à raison de 6,1 g/l de chrome puis on l'active suivant une procédure en tout point semblable à celle de l'exemple 1 point B.

Utilisé pour la polymérisation de l'éthylène suivant un mode opératoire en tout point semblable à celui de l'exemple 1, il conduit, avec une activité α de 31990 et un temps d'induction de 23 minutes, à un polymère de MI 1,2 et de HLMI 22,9.

## Revendications (Revendications pour l'(les) Etat(s) contractant(s) suivant(s): AT, BE, DE, FR, GB, IT, NL, PT, SE)

1. Particules microsphéroïdales de silice de 50 à 200 µm de diamètre, caractérisées par
- une surface spécifique supérieure à 700 m²/g
- un volume poreux compris entre 1 et 3,5 cm³/g
- un facteur de rondeur inférieur à 1,40
- un coefficient de variation de leur distribution granulométrique exprimé en % inférieur à 60 %.

2. Procédé d'obtention de particules microsphéroïdales homodisperses de silice conformes à la revendication 1, caractérisé en ce qu'il comprend une pulvérisation, au travers d'un orifice de pulvérisation et dans une chambre, d'un matériau liquide (L) gélifiable choisi parmi les précurseurs de silice, chargé électrostatiquement de manière à produire des macrogouttes de 100 à 1 000 µm de diamètre, issues directement de l'orifice de pulvérisation qui se scindent en microgouttes plus petites de 50 à 200 µm de diamètre qui tombent dans la chambre, une gélification se produisant de manière prépondérante pendant la chute des microgouttes dans la chambre.

3. Procédé selon la revendication 2, caractérisé en ce que le matériau liquide (L) est chargé électrostatiquement à des tensions comprises entre 1 et 100 kV par l'intermédiaire d'électrode(s), chargée(s) indifféremment positivement ou négativement et disposée(s) directement dans le matériau liquide (L) ou sur la face extérieure de l'orifice de pulvérisation lorsque ce dernier est constitué d'un matériau électriquement conducteur.

4. Procédé selon la revendication 2 ou 3, caractérisé en ce qu'il comprend
- la pulvérisation, au travers d'un orifice de pulvérisation et dans une chambre, d'un matériau liquide (L), contenant un composé gélifiable du silicium, chargé électrostatiquement de manière à produire des macrogouttes qui se scindent en microgouttes au sein desquelles se produit une gélification induite par un composé (B) choisi parmi les composés acides ou basiques, liquides ou gazeux;
- la réception des particules microsphéroïdales ainsi obtenues sur une surface solide ou dans un milieu liquide (C) et
- la récupération des particules microsphéroïdales.

5. Procédé selon la revendication 4, caractérisé en ce qu'il comprend en outre:
- le lavage des particules microsphéroïdales avec de l'eau puis avec un agent de lavage choisi parmi les solutions aqueuses de sels d'ammonium et les acides dilués;
- le traitement des particules microsphéroïdales ainsi obtenues par un liquide organique choisi parmi les alcanols contenant de 1 à 4 atomes de carbone et/ou les alcanones contenant de 3 à 5 atomes de carbone et
- le séchage des particules microsphéroïdales.

6. Procédé selon les revendications 4 ou 5, caractérisé en ce que le composé gélifiable du silicium contenu dans le matériau liquide (L) est choisi parmi les silicates de métaux alcalins, d'ammonium et d'ammoniums quaternaires ou les tétraalkoxysilanes.

7. Procédé selon les revendications 4 à 6, caractérisé en ce que le composé (B) est choisi parmi les composés acides tels que les oxacides et hydracides inorganiques, les acides carboxyliques ou parmi les composés basiques tels que l'ammoniac et les amines aliphatiques, alicycliques ou aromatiques.

8. Procédé selon les revendications 4 à 7 caractérisé en ce que le milieu liquide (C) est choisi parmi l'eau et les solutions de sulfate d'ammonium, d'ammoniaque ou d'acide chlorhydrique.

9. Procédé selon les revendications 4 à 8, caractérisé en ce que le matériau liquide (L) est vaporisé dans la chambre contenant le composé (B) à l'état gazeux.

10. Procédé selon les revendications 4 à 8, caractérisé en ce que un matériau liquide (L) et le composé (B), sous la forme liquide ou sous la forme d'une solution aqueuse, sont pulvérisés indépendamment l'un de l'autre mais simultanément dans la chambre.

11. Procédé selon les revendications 4 à 8, caractérisé en ce que le matériau liquide (L) est mis en contact, dans une filière mélangeuse située avant l'orifice de pulvérisation, avec une solution aqueuse du composé (B).

12. Procédé selon l'une quelconque des revendications 4 à 9, caractérisé en ce que le matériau liquide (L) contient en outre un composé du chrome coprécipitable avec le composé de silicium.

13. Procédé selon l'une quelconque des revendications 4 à 9, caractérisé en ce que le matériau liquide (L) contient en outre un composé du titane coprécipitable avec le composé de silicium.

14. Procédé selon l'une quelconque des revendications 3 à 12, caractérisé en ce que la chambre contient des vapeurs de TiCl₄ susceptibles d'être incorporées par adsorption aux microgouttes en cours de gélification.

15. Catalyseurs de polymérisation des alpha-oléfines contenant du chrome, supportés sur les particules microsphéroïdales de silice selon la revendication 1.

16. Catalyseurs selon la revendication 15, caractérisés en ce qu'ils contiennent du titane.

17. Procédé pour la polymérisation des alpha-oléfines en présence d'un catalyseur selon la revendication 15 ou 16.

18. Procédé selon la revendication 17, appliqué à la polymérisation de l'éthylène.

## Revendications (Revendications pour l'(les) Etat(s) contractant(s) suivant(s): ES)

1. Procédé d'obtention de particules microsphéroïdales homodisperses de silice de 50 à 200 µm de diamètre, présentant
- une surface spécifique supérieure à 700 m²/g
- un volume poreux compris entre 1 et 3,5 cm³/g
- un facteur de rondeur inférieur à 1,40
- un coefficient de variation de leur distribution granulométrique exprimé en % inférieur à 60 %,
caractérisé en ce qu'il comprend une pulvérisation, au travers d'un orifice de pulvérisation et dans une chambre, d'un matériau liquide (L) gélifiable choisi parmi les précurseurs de silice, chargé électrostatiquement de manière à produire des macrogouttes de 100 à 1 000 µm de diamètre, issues directement de l'orifice de pulvérisation qui se scindent en microgouttes plus petites de 50 à 200 µm de diamètre qui tombent dans la chambre, une gélification se produisant de manière prépondérante pendant la chute des microgouttes dans la chambre.

2. Procédé selon la revendication 1, caractérisé en ce que le matériau liquide (L) est chargé électrostatiquement à des tensions comprises entre 1 et 100 kV par l'intermédiaire d'électrode(s), chargée(s) indifféremment positivement ou négativement et disposée(s) directement dans le matériau liquide (L) ou sur la face extérieure de l'orifice de pulvérisation lorsque ce dernier est constitué d'un matériau électriquement conducteur.

3. Procédé selon la revendication 1 ou 2, caractérisé en ce qu'il comprend
- la pulvérisation, au travers d'un orifice de pulvérisation et dans une chambre, d'un matériau liquide (L), contenant un composé gélifiable du silicium, chargé électrostatiquement de manière à produire des macrogouttes qui se scindent en microgouttes au sein desquelles se produit une gélification induite par un composé (B) choisi parmi les composés acides ou basiques, liquides ou gazeux;
- la réception des particules microsphéroïdales ainsi obtenues sur une surface solide ou dans un milieu liquide (C) et
- la récupération des particules microsphéroïdales.

4. Procédé selon la revendication 3, caractérisé en ce qu'il comprend en outre:
- le lavage des particules microsphéroïdales avec de l'eau puis avec un agent de lavage choisi parmi les solutions aqueuses de sels d'ammonium et les acides dilués;
- le traitement des particules microsphéroïdales ainsi obtenues par un liquide organique choisi parmi les alcanols contenant de 1 à 4 atomes de carbone et/ou les alcanones contenant de 3 à 5 atomes de carbone et
- le séchage des particules microsphéroïdales.

5. Procédé selon les revendications 3 ou 4, caractérisé en ce que le composé gélifiable du silicium contenu dans le matériau liquide (L) est choisi parmi les silicates de métaux alcalins, d'ammonium et d'ammoniums quaternaires ou les tétraalkoxysilanes.

6. Procédé selon les revendications 3 à 5, caractérisé en ce que le composé (B) est choisi parmi les composés acides tels que les oxacides et hydracides inorganiques, les acides carboxyliques ou parmi les composés basiques tels que l'ammoniac et les amines aliphatiques, alicycliques ou aromatiques.

7. Procédé selon les revendications 3 à 6 caractérisé en ce que le milieu liquide (C) est choisi parmi l'eau et les solutions de sulfate d'ammonium, d'ammoniaque ou d'acide chlorhydrique.

8. Procédé selon les revendications 3 à 7, caractérisé en ce que le matériau liquide (L) est vaporisé dans la chambre contenant le composé (B) à l'état gazeux.

9. Procédé selon les revendications 3 à 7, caractérisé en ce que un matériau liquide (L) et le composé (B), sous la forme liquide ou sous la forme d'une solution aqueuse, sont pulvérisés indépendamment l'un de l'autre mais simultanément dans la chambre.

10. Procédé selon les revendications 3 à 7, caractérisé en ce que le matériau liquide (L) est mis en contact, dans une filière mélangeuse située avant l'orifice de pulvérisation, avec une solution aqueuse du composé (B).

11. Procédé selon l'une quelconque des revendications 3 à 8, caractérisé en ce que le matériau liquide (L) contient en outre un composé du chrome coprécipitable avec le composé de silicium.

12. Procédé selon l'une quelconque des revendications 3 à 8, caractérisé en ce que le matériau liquide (L) contient en outre un composé du titane coprécipitable avec le composé de silicium.

13. Procédé selon l'une quelconque des revendications 2 à 11, caractérisé en ce que la chambre contient des vapeurs de TiCl₄ susceptibles d'être incorporées par adsorption aux microgouttes en cours de gélification.

14. Procédé pour la polymérisation des alpha-oléfines en présence d'un catalyseur contenant du chrome supporté sur les particules microsphéroïdales de silice obtenues selon le procédé conforme à l'une quelconque des revendications 1 à 13.

15. Procédé selon la revendication 14, appliqué à la polymérisation de l'éthylène.

## Claims (Claims for the following Contracting State(s): AT, BE, DE, FR, GB, IT, NL, PT, SE)

1. Microspheroidal silica particles from 50 to 200 µm in diameter, characterized by
- a specific surface greater than 700 m²/g
- a pore volume of between 1 and 3.5 cm³/g
- a roundness factor lower than 1.40
- a coefficient of variation of their particle size distribution, expressed in %, lower than 60 %.

2. Process for obtaining monodisperse microspheroidal silica particles in accordance with Claim 1, characterized in that it comprises spraying an electrostatically charged gellable liquid material (L) chosen from silica precursors through a spraying orifice and into a chamber, so as to produce macrodrops from 100 to 1000 µm in diameter, originating directly from the spraying orifice which break up into smaller microdrops from 50 to 200 µm in diameter which fall in the chamber, gelling taking place predominantly during the fall of the microdrops in the chamber.

3. Process according to Claim 2, characterized in that the liquid material (L) is electrostatically charged to voltages of between 1 and 100 kV by means of one or more either positively or negatively charged electrode(s) arranged directly in the liquid material (L) or on the outer face of the spraying orifice when the latter consists of an electrically conductive material.

4. Process according to Claim 2 or 3, characterized in that it comprises
- spraying an electrostatically charged liquid material (L) containing a gellable silicon compound through a spraying orifice and into a chamber, so as to produce macrodrops which break up into microdrops within which a gelling is produced, induced by a compound (B) chosen from liquid or gaseous acidic or basic compounds;
- receiving the microspheroidal particles thus obtained on a solid surface or in a liquid medium (C) and
- recovering the microspheroidal particles.

5. Process according to Claim 4, characterized in that it additionally comprises:
- washing the microspheroidal particles with water and then with a washing agent chosen from aqueous solutions of ammonium salts and dilute acids;
- treating the microspheroidal particles thus obtained with an organic liquid chosen from alkanols containing from 1 to 4 carbon atoms and/or alkanones containing from 3 to 5 carbon atoms and
- drying the microspheroidal particles.

6. Process according to Claim 4 or 5, characterized in that the gellable silicon compound present in the liquid material (L) is chosen from alkali metal, ammonium and quaternary ammonium silicates or tetraalkoxysilanes.

7. Process according to Claims 4 to 6, characterized in that the compound (B) is chosen from acidic compounds such as inorganic oxyacids and hydracids, carboxylic acids or from basic compounds such as ammonia and aliphatic, alicyclic or aromatic amines.

8. Process according to Claims 4 to 7, characterized in that the liquid medium (C) is chosen from water and solutions of ammonium sulphate, of aqueous ammonia or of hydrochloric acid.

9. Process according to Claims 4 to 8, characterized in that the liquid material (L) is vaporized in the chamber containing the compound (B) in the gaseous state.

10. Process according to Claims 4 to 8, characterized in that a liquid material (L) and the compound (B), in the liquid form or in the form of an aqueous solution, are sprayed into the chamber independently of each other but simultaneously.

11. Process according to Claims 4 to 8, characterized in that the liquid material (L) is brought into contact with an aqueous solution of the compound (B) in a mixer die situated in front of the spraying orifice.

12. Process according to any one of Claims 4 to 9, characterized in that the liquid material (L) additionally contains a chromium compound capable of coprecipitating with the silicon compound.

13. Process according to any one of Claims 4 to 9, characterized in that the liquid material (L) additionally contains a titanium compound capable of coprecipitating with the silicon compound.

14. Process according to any one of Claims 3 to 12, characterized in that the chamber contains TiCl₄ vapour capable of being incorporated into the gelling microdrops by adsorption.

15. Catalysts for the polymerization of alphaolefins, containing chromium and supported on the microspheroidal silica particles according to Claim 1.

16. Catalysts according to Claim 15, characterized in that they contain titanium.

17. Process for the polymerization of alpha-olefins in the presence of a catalyst according to Claim 15 or 16.

18. Process according to Claim 17, applied to the polymerization of ethylene.

## Claims (Claims for the following Contracting State(s): ES)

1. Process for obtaining monodisperse microspheroidal silica particles from 50 to 200 µm in diameter, having
- a specific surface greater than 700 m²/g
- a pore volume of between 1 and 3.5 cm³/g
- a roundness factor lower than 1.40
- a coefficient of variation of their particle size distribution, expressed in %, lower than 60 %,
characterized in that it comprises spraying an electrostatically charged gellable liquid material (L) chosen from silica precursors through a spraying orifice and into a chamber, so as to produce macrodrops from 100 to 1000 µm in diameter, originating directly from the spraying orifice which break up into smaller microdrops from 50 to 200 µm in diameter which fall in the chamber, gelling taking place predominantly during the fall of the microdrops in the chamber.

2. Process according to Claim 1, characterized in that the liquid material (L) is electrostatically charged to voltages of between 1 and 100 kV by means of one or more either positively or negatively charged electrode(s) arranged directly in the liquid material (L) or on the outer face of the spraying orifice when the latter consists of an electrically conductive material.

3. Process according to Claim 1 or 2, characterized in that it comprises
- spraying an electrostatically charged liquid material (L) containing a gellable silicon compound through a spraying orifice and into a chamber, so as to produce macrodrops which break up into microdrops within which a gelling is produced, induced by a compound (B) chosen from liquid or gaseous acidic or basic compounds;
- receiving the microspheroidal particles thus obtained on a solid surface or in a liquid medium (C) and
- recovering the microspheroidal particles.

4. Process according to Claim 3, characterized in that it additionally comprises:
- washing the microspheroidal particles with water and then with a washing agent chosen from aqueous solutions of ammonium salts and dilute acids;
- treating the microspheroidal particles thus obtained with an organic liquid chosen from alkanols containing from 1 to 4 carbon atoms and/or alkanones containing from 3 to 5 carbon atoms and
- drying the microspheroidal particles.

5. Process according to Claims 3 or 4, characterized in that the gellable silicon compound present in the liquid material (L) is chosen from alkali metal, ammonium and quaternary ammonium silicates or tetraalkoxysilanes.

6. Process according to Claims 3 to 5, characterized in that the compound (B) is chosen from acidic compounds such as inorganic oxyacids and hydracids, carboxylic acids or from basic compounds such as ammonia and aliphatic, alicyclic or aromatic amines.

7. Process according to Claims 3 to 6, characterized in that the liquid medium (C) is chosen from water and solutions of ammonium sulphate, of aqueous ammonia or of hydrochloric acid.

8. Process according to Claims 3 to 7, characterized in that the liquid material (L) is vaporized in the chamber containing the compound (B) in the gaseous state.

9. Process according to Claims 3 to 7, characterized in that a liquid material (L) and the compound (B), in the liquid form or in the form of an aqueous solution, are sprayed into the chamber independently of each other but simultaneously.

10. Process according to Claims 3 to 7, characterized in that the liquid material (L) is brought into contact with an aqueous solution of the compound (B) in a mixer die situated in front of the spraying orifice.

11. Process according to any one of Claims 3 to 8, characterized in that the liquid material (L) additionally contains a chromium compound capable of coprecipitating with the silicon compound.

12. Process according to any one of Claims 3 to 8, characterized in that the liquid material (L) additionally contains a titanium compound capable of coprecipitating with the silicon compound.

13. Process according to any one of Claims 2 to 11, characterized in that the chamber contains TiCl₄ vapour capable of being incorporated into the gelling microdrops by adsorption.

14. Process for the polymerization of alpha-olefins in the presence of a catalyst containing chromium supported on the microspheroidal silica particles obtained by the process in accordance with any one of Claims 1 to 13.

15. Process according to Claim 14, applied to the polymerisation of ethylene.

## Patentansprüche (Patentansprüche für folgende(n) Vertragsstaat(en): AT, BE, DE, FR, GB, IT, NL, PT, SE)

1. Mikrosphäroidale Siliziumdioxidteilchen mit einem Durchmesser von 50 bis 200 µm, gekennzeichnet durch
- eine spezifische Oberfläche größer als 700 m²/g
- ein Porenvolumen zwischen 1 und 3,5 cm³/g
- einen Rundungsfaktor niedriger als 1,40
- einen Variationskoeffizienten ihrer granulometrischen Verteilung, ausgedrückt in %, kleiner als 60%.

2. Verfahren zur Herstellung von homodispersen mikrosphäroidalen Siliziumdioxidteilchen gemäß Anspruch 1, dadurch gekennzeichnet, daß es ein Zerstäuben eines unter den Vorstufen von Siliziumdioxid ausgewählten gelierbaren flüssigen Materials (L) durch eine Sprühöffnung und in eine Kammer umfaßt, wobei das Material (L) elektrostatisch aufgeladen ist, um Makrotropfen mit einem Durchmesser von 100 bis 1 000 µm zu erzeugen, die direkt aus der Sprühöffnung stammen, die sich in kleinere Mikrotropfen mit einem Durchmesser von 50 bis 200 µm teilen, die in die Kammer fallen, wobei ein Gelieren überwiegend während des Falls der Mikrotropfen in die Kammer erfolgt.

3. Verfahren gemäß Anspruch 2, dadurch gekennzeichnet, daß das flüssige Material (L) bei Spannungen zwischen 1 und 100 kV mittels einer Elektrode (Elektroden) elektrostatisch aufgeladen wird, die entweder positiv oder negativ geladen ist(sind) und die direkt in dem flüssigen Material (L) oder auf der Außenseite der Sprühöffnung, wenn diese letztere aus einem elektrisch leitfähigen Material besteht, angeordnet ist(sind).

4. Verfahren gemäß Anspruch 2 oder 3, dadurch gekennzeichnet, daß es umfaßt
- das Zerstäuben eines flüssigen Materials (L), das eine gelierbare Siliziumverbindung enthält, durch eine Sprühöffnung und in eine Kammer, wobei das Material (L) elektrostatisch aufgeladen ist, um Makrotropfen zu erzeugen, die sich in Mikrotropfen teilen, in deren Innern ein Gelieren erfolgt, das durch eine Verbindung (B) bewirkt wird, die unter den sauren oder basischen, flüssigen oder gasförmigen Verbindungen ausgewählt ist;
- die Aufnahme der so erhaltenen mikrosphäroidalen Teilchen auf einer festen Oberfläche oder in einem flüssigen Medium (C) und
- die Gewinnung der mikrosphäroidalen Teilchen.

5. Verfahren gemäß Anspruch 4, dadurch gekennzeichnet, daß es außerdem umfaßt
- das Waschen der mikrosphäroidalen Teilchen mit Wasser, dann mit einem Waschmittel, das unter den wäßrigen Lösungen von Ammoniumsalzen und den verdünnten Säuren ausgewählt ist;
- die Behandlung der so erhaltenen mikrosphäroidalen Teilchen mit einer organischen Flüssigkeit, die unter den Alkanolen mit 1 bis 4 Kohlenstoffatomen und/oder den Alkanonen mit 3 bis 5 Kohlenstoffatomen ausgewählt ist, und
- das Trocknen der mikrosphäroidalen Teilchen.

6. Verfahren gemäß den Ansprüchen 4 oder 5, dadurch gekennzeichnet, daß die gelierbare Siliziumverbindung, die in dem flüssigen Material (L) enthalten ist, unter den Alkalimetall-, Ammonium- und quartären Ammoniumsilikaten oder den Tetraalkoxysilanen ausgewählt ist.

7. Verfahren gemäß den Ansprüchen 4 bis 6, dadurch gekennzeichnet, daß die Verbindung (B) unter den sauren Verbindungen wie den anorganischen Sauerstoffsäuren und Wasserstoffsäuren, den Carbonsäuren oder unter den basischen Verbindungen wie Ammoniak und den aliphatischen, alicyclischen oder aromatischen Aminen ausgewählt ist.

8. Verfahren gemäß den Ansprüchen 4 bis 7, dadurch gekennzeichnet, daß das flüssige Medium (C) unter Wasser und den Ammoniumsulfat-, Ammoniak- oder Salzsäurelösungen ausgewählt ist.

9. Verfahren gemäß den Ansprüchen 4 bis 8, dadurch gekennzeichnet, daß das flüssige Material (L) in die Kammer, die die Verbindung (B) in gasförmigem Zustand enthält, zerstäubt wird.

10. Verfahren gemäß den Ansprüchen 4 bis 8, dadurch gekennzeichnet, daß ein flüssiges Material (L) und die Verbindung (B) in flüssiger Form oder in Form einer wäßrigen Lösung voneinander unabhängig, aber gleichzeitig in die Kammer gesprüht werden.

11. Verfahren gemäß den Ansprüchen 4 bis 8, dadurch gekennzeichnet, daß das flüssige Material (L) in einer Mischdüse, die vor der Sprühöffnung liegt, mit einer wäßrigen Lösung der Verbindung (B) in Kontakt gebracht wird.

12. Verfahren gemäß einem der Ansprüche 4 bis 9, dadurch gekennzeichnet, daß das flüssige Material (L) außerdem eine Chromverbindung enthält, die mit der Siliziumverbindung zusammen ausfällbar ist.

13. Verfahren gemäß einem der Ansprüche 4 bis 9, dadurch gekennzeichnet, daß das flüssige Material (L) außerdem eine Titanverbindung enthält, die mit der Siliziumverbindung zusammen ausfällbar ist.

14. Verfahren gemäß einem der Ansprüche 3 bis 12, dadurch gekennzeichnet, daß die Kammer TiCl₄-Dämpfe enthält, die geeignet sind, im Verlauf des Gelierens durch Adsorption in die Mikrotropfen eingebaut zu werden.

15. Katalysatoren zur Polymerisation von alpha-Olefinen, die Chrom enthalten und die auf mikrosphäroidalen Siliziumdioxidteilchen gemäß Anspruch 1 gebunden sind.

16. Katalysatoren gemäß Anspruch 15, dadurch gekennzeichnet, daß sie Titan enthalten.

17. Verfahren zur Polymerisation von alpha-Olefinen in Gegenwart eines Katalysators gemäß Anspruch 15 oder 16.

18. Verfahren gemäß Anspruch 17, angewendet auf die Polymerisation von Ethylen.

## Patentansprüche (Patentansprüche für folgende(n) Vertragsstaat(en): ES)

1. Verfahren zur Herstellung von homodispersen mikrosphäroidalen Siliziumdioxidteilchen mit einem Durchmesser von 50 bis 200 µm, die
- eine spezifische Oberfläche größer als 700 m²/g
- ein Porenvolumen zwischen 1 und 3,5 cm³/g
- einen Rundungsfaktor niedriger als 1,40
- einen Variationskoeffizienten ihrer granulometrischen Verteilung, ausgedrückt in %, kleiner als 60%
aufweisen, dadurch gekennzeichnet, daß es ein Zerstäuben eines unter den Vorstufen von Siliziumdioxid ausgewählten gelierbaren flüssigen Materials (L) durch eine Sprühöffnung und in eine Kammer umfaßt, wobei das Material (L) elektrostatisch aufgeladen ist, um Makrotropfen mit einem Durchmesser von 100 bis 1 000 µm zu erzeugen, die direkt aus der Sprühöffnung stammen, die sich in kleinere Mikrotropfen mit einem Durchmesser von 50 bis 200 µm teilen, die in die Kammer fallen, wobei ein Gelieren überwiegend während des Falls der Mikrotropfen in die Kammer erfolgt.

2. Verfahren gemäß Anspruch 1, dadurch gekennzeichnet, daß das flüssige Material (L) bei Spannungen zwischen 1 und 100 kV mittels einer Elektrode (Elektroden) elektrostatisch aufgeladen wird, die entweder positiv oder negativ geladen ist(sind) und die direkt in dem flüssigen Material (L) oder auf der Außenseite der Sprühöffnung, wenn diese letztere aus einem elektrisch leitfähigen Material besteht, angeordnet ist(sind).

3. Verfahren gemäß Anspruch 1 oder 2, dadurch gekennzeichnet, daß es umfaßt
- das Zerstäuben eines flüssigen Materials (L), das eine gelierbare Siliziumverbindung enthält, durch eine Sprühöffnung und in eine Kammer, wobei das Material (L) elektrostatisch aufgeladen ist, um Makrotropfen zu erzeugen, die sich in Mikrotropfen teilen, in deren Innern ein Gelieren erfolgt, das durch eine Verbindung (B) bewirkt wird, die unter den sauren oder basischen, flüssigen oder gasförmigen Verbindungen ausgewählt ist;
- die Aufnahme der so erhaltenen mikrosphäroidalen Teilchen auf einer festen Oberfläche oder in einem flüssigen Medium (C) und
- die Gewinnung der mikrosphäroidalen Teilchen.

4. Verfahren gemäß Anspruch 3, dadurch gekennzeichnet, daß es außerdem umfaßt
- das Waschen der mikrosphäroidalen Teilchen mit Wasser, dann mit einem Waschmittel, das unter den wäßrigen Lösungen von Ammoniumsalzen und den verdünnten Säuren ausgewählt ist;
- die Behandlung der so erhaltenen mikrosphäroidalen Teilchen mit einer organischen Flüssigkeit, die unter den Alkanolen mit 1 bis 4 Kohlenstoffatomen und/oder den Alkanonen mit 3 bis 5 Kohlenstoffatomen ausgewählt ist, und
- das Trocknen der mikrosphäroidalen Teilchen.

5. Verfahren gemäß den Ansprüchen 3 oder 4, dadurch gekennzeichnet, daß die gelierbare Siliziumverbindung, die in dem flüssigen Material (L) enthalten ist, unter den Alkalimetall-, Ammonium- und quartären Ammoniumsilikaten oder den Tetraalkoxysilanen ausgewählt ist.

6. Verfahren gemäß den Ansprüchen 3 bis 5, dadurch gekennzeichnet, daß die Verbindung (B) unter den sauren Verbindungen wie den anorganischen Sauerstoffsäuren und Wasserstoffsäuren, den Carbonsäuren oder unter den basischen Verbindungen wie Ammoniak und den aliphatischen, alicyclischen oder aromatischen Aminen ausgewählt ist.

7. Verfahren gemäß den Ansprüchen 3 bis 6, dadurch gekennzeichnet, daß das flüssige Medium (C) unter Wasser und den Ammoniumsulfat-, Ammoniak- oder Salzsäurelösungen ausgewählt ist.

8. Verfahren gemäß den Ansprüchen 3 bis 7, dadurch gekennzeichnet, daß das flüssige Material (L) in die Kammer, die die Verbindung (B) in gasförmigem Zustand enthält, zerstäubt wird.

9. Verfahren gemäß den Ansprüchen 3 bis 7, dadurch gekennzeichnet, daß ein flüssiges Material (L) und die Verbindung (B) in flüssiger Form oder in Form einer wäßrigen Lösung voneinander unabhängig, aber gleichzeitig in die Kammer gesprüht werden.

10. Verfahren gemäß den Ansprüchen 3 bis 7, dadurch gekennzeichnet, daß das flüssige Material (L) in einer Mischdüse, die vor der Sprühöffnung liegt, mit einer wäßrigen Lösung der Verbindung (B) in Kontakt gebracht wird.

11. Verfahren gemäß einem der Ansprüche 3 bis 8, dadurch gekennzeichnet, daß das flüssige Material (L) außerdem eine Chromverbindung enthält, die mit der Siliziumverbindung zusammen ausfällbar ist.

12. Verfahren gemäß einem der Ansprüche 3 bis 8, dadurch gekennzeichnet, daß das flüssige Material (L) außerdem eine Titanverbindung enthält, die mit der Siliziumverbindung zusammen ausfällbar ist.

13. Verfahren gemäß einem der Ansprüche 2 bis 11, dadurch gekennzeichnet, daß die Kammer TiCl₄-Dämpfe enthält, die geeignet sind, im Verlauf des Gelierens durch Adsorption in die Mikrotropfen eingebaut zu werden.

14. Verfahren zur Polymerisation von alpha-Olefinen in Gegenwart eines Chrom enthaltenden Katalysators, der auf die mikrosphäroidalen Siliziumdioxidteilchen, die gemäß dem Verfahren nach einem der Ansprüche 1 bis 13 erhalten wurden, gebunden ist.

15. Verfahren gemäß Anspruch 14, angewendet auf die Polymerisation von Ethylen.
